# EUROPÄISCHE PATENTSCHRIFT

(11) **EP 3 420 764 B1**
(45) Veröffentlichungstag und Bekanntmachung des Hinweises auf die Patenterteilung: **02.12.2020**
(21) Anmeldenummer: 17706718.8
(22) Anmeldetag: 20.02.2017
(51) Int. Cl.: H04W 72/04, H04W 4/06, H04W 72/12, H04W 4/70, H04W 76/14, H04L 12/911

(54) **SENDEEMPFÄNGER, VERFAHREN UND COMPUTERPROGRAMM ZUR FUNKRESSOURCENVERTEILUNG UND WEITERGABE VON NICHT BENÖTIGTE FUNKRESSOURCEN AN UND ZWISCHEN ENDGERÄTEN**
TRANSCEIVERS, METHODS AND COMPUTER PROGRAM FOR RADIO RESOURCE DISTRIBUTION AND TRANSMISSION OF UNREQUIRED RADIO RESOURCES TO AND BETWEEN TERMINALS
EMETTEUR-RÉCEPTEURS, PROCÉDÉS ET PROGRAMME INFORMATIQUE POUR LA RÉPARTITION DE RESSOURCES RADIO ET LA TRANSMISSION DE RESSOURCES RADIO NON REQUISES À DES TERMINAUX ET ENTRE LESDITS TERMINAUX

(30) Priorität: 22.02.2016 DE 102016103027
(43) Veröffentlichungstag der Anmeldung: 02.01.2019
(73) Patentinhaber: Technische Universität Ilmenau, 98693 Ilmenau (DE)
(72) Erfinder: PUSCHMANN, André, 99091 Erfurt (DE); SOLEYMANI, Dariush M., 98693 Ilmenau (DE); MITSCHELE-THIEL, Andreas, 98693 Ilmenau (DE); ROTH-MANDUTZ, Elke, 90419 Nürnberg (DE); MÜCKENHEIM, Jens, 06217 Merseburg (DE)
(74) Vertreter: 2SPL Patentanwälte PartG mbB
(86) Internationale Anmeldenummer: PCT/EP2017/053817
(87) Internationale Veröffentlichungsnummer: WO 2017/153157

(56) Entgegenhaltungen:
- WO-A1-2015/069051
- US-A1- 2010 040 008
- US-A1- 2012 106 517
- SOLEYMANI DARIUSH M ET AL: "A hierarchical radio resource management scheme for next generation cellular networks", 2016 IEEE WIRELESS COMMUNICATIONS AND NETWORKING CONFERENCE WORKSHOPS (WCNCW), IEEE, 3. April 2016 (2016-04-03), Seiten 416-420, XP032953513, DOI: 10.1109/WCNCW.2016.7552735 [gefunden am 2016-08-25]

## Beschreibung

Ausführungsbeispiele der vorliegenden Erfindung liegen auf dem Gebiet der Mobilkommunikation, insbesondere auf dem Gebiet der effizienten Funkressourcenverwaltung in Mobilkommunikationssystemen.

Zukünftige Generationen zellularer Netze setzen, zusätzlich zur ursprünglich rein Infrastrukturbasierten Kommunikation, zunehmend auf direkte Kommunikation zwischen Endgeräten (auch englisch: Device-to-Device (D2D) communication). Zentrale Anwendungen hierfür sind u.a. im Bereich der Maschine-zu-Maschine (M2M) Kommunikation zu finden. Diese zeichnen sich häufig durch Verbindungen aus, auf denen nur Pakete mit geringer Größe übertragen werden (im Vergleich zu herkömmlichen Datenverbindungen).

M2M Kommunikation wird beispielsweise eingesetzt zur Übertragung von Daten zwischen verschiedenen Endgeräten, ohne dass dabei eine menschliche Interaktion stattfindet. Anwendungen in diesem Bereich existieren beispielsweise in der Logistik, z. B. Warenhaltung, Warenverfolgung, etc., oder im Maschinenbau, z. B. Ferndiagnose und Fernwartung. Darüber hinaus sind Entwicklungsaktivitäten bekannt, die sich mit M2M-Kommunikation in Bereichen wie Telemedizin, Energieverwaltung, z. B. Smart Metering/Smart Grid, Mobilität, z.B. E-Mobilität, Car-to-X, etc., befassen.

Konventionelle Anwendungen umfassen beispielsweise stationäre Installationen der M2M-Komponenten, wie z. B. in Verbrauchszählern, Verkaufsautomaten, bei der Maschinenfernwartung, usw. Viele dieser M2M-Anwendungen verwenden eine Kommunikation über Mobilfunk, welche es neben dem Wegfall der Notwendigkeit einer festen Kommunikationsanbindung erlaubt, eine Nachrichtenverbindung selbst in sonst nicht erreichbaren Gebieten zu erbringen.

Z.B. kann der derzeitige LTE-Standard (von englisch Long Term Evolution, Mobilfunkstandard der 4. Generation (4G)) für die typischen M2M-Applikationen die verfügbaren Ressourcen nicht immer effizient einsetzen. Ein Grund dafür ist die zu grobe Granularität der Ressourcenvergabe innerhalb von LTE. Im LTE-Standard ist eine minimale Zuteilungseinheit in Form von Ressource Blöcken festgelegt, welche derzeit die Länge von einem Transmission-Time-Interval (TTI, Übertragungsintervall) oder 1 ms im Zeitbereich bzw. 12 Unterträgern mit jeweils 15 kHz Abstand (insgesamt 180 kHz) im Frequenzbereich aufweist. Dadurch ist eine Mindestdatenmenge festgelegt, welche durch Codierung, Modulation, Anzahl der Symbole reserviert ist, z.B. welche dann auch für Kanalschätzung, Kontrollinformationen, usw. gegeben ist. Für normale Anwendungen, z.B. Webbrowsing, FTP Download, Videostreaming, kann diese Menge normalerweise aufgefüllt werden, sodass sich eine effiziente Datenübertragung ergibt. Im Fall einer M2M-Übertragung kann dies jedoch dazu führen, dass ein Teil der Ressourcen, die einem einzelnen M2M-Nutzer zugewiesen werden kann, ungenutzt bleibt, da insgesamt nur ein Teil zur Übertragung benötigt wird. Dies führt im Gesamtsystem zu einem ungünstigeren Einsatz der Ressourcen und damit zu einer geringeren Kapazitätsauslastung und somit geringeren Effizienz der Datenübertragung.

Aus dem Stand der Technik sind Methoden bekannt, die sich mit dem oben genannten Problem beschäftigen. 3GPP (von engl. 3rd Generation Partnership Project), "TR 36.881: Study on latency reduction techniques for LTE (Release 13)," 2015, schlägt vor, die Granularität der Ressourcenvergabe in LTE zu verfeinern. Diese Vergabe erfolgt herkömmlich in jedem so genannten TTI, welches derzeit genau einem LTE Sub-Frame (Funkunterrahmen) entspricht, also genau eine Millisekunde dauert. Anstatt die Verteilung der Ressourcen nur in jedem LTE Sub-Frame durchzuführen, könnte diese auch in kürzeren Intervallen stattfinden. Im Rahmen der Standardisierung innerhalb der 3GPP wird daher derzeit eine Reduzierung/Verkürzung des TTI diskutiert. Konkret wird hierbei sowohl eine Halbierung des TTI auf 0.5 Millisekunden, als auch die Reduzierung bis auf die Länge eines OFDM-Symbols (von engl. Orthogonal Frequency Division Multiplexing, orthogonaler Frequenzbereichsmultiplex) von 66,7 Mikrosekunden Länge diskutiert. Dieses Verfahren geht mit einem Anstieg der zu übertragenden Signalisierungsinformationen einher. Diese sind bereits in heutigen Systemen vergleichsweise hoch, was in der Praxis bereits zu Kapazitätsengpässen in den entsprechenden Kanälen zum Austausch der Signalisierungsinformationen (Physical Downlink/Uplink Control Channel, physikalische Kontrollkanäle in der Aufwärts-/Abwärtstrecke) führen kann. In 3GPP werden die Verkleinerung der Granularität der Ressourcenvergabe um die Übertragung für geringe Datenmengen effizienter zu gestalten und eine Verkürzung der mittleren Zugriffszeit für mobile Endgeräte, diskutiert.

Eine weitere Möglichkeit besteht in der Zuteilung des gleichen Ressourcen Blocks für unterschiedlichen Nutzer, vgl. M. Belleschi, G. Fodor, D. Della Penda, A. Pradini, M. Johansson and A. Abrardo, "Benchmarking Practical RRM Algorithms for D2D Communications in LTE Advanced," Wireless personal communications, pp. 883--910, 2015. Speziell bei größerer Entfernung der Übertragungswege reduziert sich die Interferenz zwischen den Übertragungen. Damit kann die auftretende Effizienzverminderung zum Teil ausgeglichen werden. Ein etwaiger Nachteil dieses Verfahrens kann darin bestehen, dass man bei der Wahl der Übertragungswege auf relativ großen räumlichen Abstand zwischen den Übertragungen angewiesen ist. Insbesondere eine gleichzeitige Kommunikation von Nutzern in unmittelbarer Nähe kann mit dieser Methode problematisch sein. Die Autoren diskutieren eine Wiederverwendung gleicher Ressourcen durch räumlich voneinander getrennte Endgeräte.

Darüber hinaus werden in P. e. a. Xue, "Schemes Related to Resource Allocation, Discovery and Signaling in D2D Systems". USA Patent US2015327315, 12 11 2015, grundsätzliche Methoden zur Vergabe von Ressourcen, zur Auffindung von mobilen Endgeräten und zur Signalisierung in D2D Systemen diskutiert. Hierbei wird u.a. ein D2D Ressourcen-Pool beschrieben, welcher über einen Broadcast Channel (BCH, Rundfunkverteilkanal) verteilt wird und daraufhin zur Kommunikation genutzt wird. Allerdings verwendet auch dieser Ansatz als kleinstes Ressourcen-Element einen Physical Resource Block (PRB, physikalischer Ressourcenblock). Im Dokument US2015327315 werden Methoden zur Ressourcenvergabe in In-Coverage (Innerhalb einer Funkabdeckung) und Out-of-Coverage (Außerhalb einer Funkabdeckung) Szenarien, z.B. durch Verwendung eines Resourcenpools, beschrieben. Darüber hinaus werden Methoden zur Auffindung von D2D-Endgeräten (Discovery) und eine Methode zur Übertragung zur Ressourcenvergabe zwischen D2D Endgeräten (Scheduling Assignment (SA) Nachricht, Ressourcenzuweisungsnachricht) offenbart. Die Schrift schlägt ferner eine Kennzeichnung der zu verwendeten Ressourcen in der Frequenz-Zeit-Domäne innerhalb der SA Nachricht vor.

Die Druckschrift WO 2015/113590 A1 beschreibt ein Konzept zur Vergabe von Funkressourcen innerhalb einer Gruppe von Mobilen, wobei ein sog. "Clusterhead" administrative Aufgaben innerhalb der Gruppe von Mobilen übernimmt.

Das Dokument US 2014/0369292 A1 beschreibt ein Konzept bei dem ein zweistufiges Ressourcenzuteilungsverfahren verwendet wird.

Die Druckschrift US 2015/0312952 A1 offenbart einen Mechanismus zur direkten Kommunikation zwischen Mobilen, die unterschiedlichen Betreibern zugeordnet sind.

Das Dokument US 2014/0328329 schlägt einen Pool-basierten Ressourcenverteilungsmechanismus für eine Basisstation vor.

Die Druckschrift US 2013/0223352 A1 beschreibt einen Ressourcenverteilungsmechanismus für eine direkte Kommunikation zwischen Mobilen.

Das Dokument US 2012/0300662 A1 offenbart einen Verteilungsmechanismus von Funkressourcen für mehrere Zellen und zur direkten Kommunikation zwischen Mobilen.

Die Druckschrift WO 2015/113720 A1 schlägt ein zeitbasiertes Verteilungskonzept für direkte Kommunikation zwischen Mobilen vor.

Das Dokument US 2010/0227622 A1 beschäftigt sich mit Quality-of-Service und diesbezüglicher Ressourcenverwaltung.

Die Druckschrift US 2012/0201158 A1 schlägt eine Utility-Metrik zur Koordination der Funkressourcen bei direkter Kommunikation zwischen Mobilen vor.

Die Druckschrift WO 2009/138820A1 beschreibt ein Konzept zur Koordination von Funkressourcen für die direkte Kommunikation zwischen Mobilen.

Das Dokument US 2010/0208673 A1 beschäftigt sich mit der direkten Kommunikation zwischen Mobilen in einem Mobilkommunikationssystem und der Verwendung von virtuellen Ressourcenblocks bei der Funkressourcenzuteilung.

Die Druckschrift US 2008/0192847 A1 unterscheidet bei der Funkressourcenzuweisung für die direkte Kommunikation zwischen Mobilen eines Mobilkommunikationssystem lokale und verteilte virtuelle Ressourcenblöcke.

Das Dokument US 2012/0106517 A1 beschreibt einen Mechanismus zur gruppenbasierten Funkressourcenzuteilung, wobei eine weitere Unterteilung der Funkressourcen innerhalb der Gruppe vorgenommen wird.

Die Druckschrift US2010/0040008 A1 beschreibt ein Konzept bei dem ein Mobilgerät die Funkressourcenzuteilung und das anschließende Kommunikationsverhalten eines anderen Mobilgerätes überwacht, um nicht genutzte Funkressourcen für sich selbst zu verwenden.

Das Dokument WO 2015/069051 A1 beschäftigt sich mit der Funkressourcenzuteilung für direkte Kommunikation von Mobilgeräten.

Es ist daher die Aufgabe der vorliegenden Erfindung, ein verbessertes Konzept für eine Ressourcenvergabe, insbesondere bei Maschine-zu-Maschine-Kommunikation, in einem Mobilfunknetz zu schaffen.

Diese Aufgabe wird gelöst gemäß den anhängigen unabhängigen Ansprüchen.

Ausführungsbeispiele basieren auf der Erkenntnis, dass Funkressourcen auch mit kleinerer Granularität verwendet und aufwandgünstig verwaltet werden können, beispielsweise wenn diese von Mobilgeräten direkt weitergegeben werden können. Darüber hinaus basieren Ausführungsbeispiele auf der Erkenntnis, dass einmal zugeteilte Funkressourcen weitergegeben und so auch gleichzeitig von mehreren Teilnehmern genutzt werden können. Insofern können Ausführungsbeispiele eine (Wieder-)Verwendung ungenutzter Funkressourcen mit Granularität kleiner als TTI, eine Weitergabe von Funkressourcen durch mobile Endgeräte und eine Gleichzeitige Nutzung von Funkressourcen durch mehrere mobile Endgeräte (aus Sicht der eNB/Basisstation) ermöglichen. Insgesamt können Ausführungsbeispiele eine verbesserte Effizienz der Funkressourcennutzung ermöglichen, da nicht benötigte Funkressourcen nicht ungenutzt bleiben, sondern an andere Teilnehmer weitergegeben und durch diese zur Übertragung eigener Daten verwendet werden können. Bisherige Wiederverwendungen von Ressourcen sind derzeit, beispielsweise für LTE, für komplette Ressourcenblöcke vorgesehen. Ausführungsbeispiele erlauben eine Verwendung von Ressourcenblöcken, die einem Nutzer zugeteilt wurden, aber nur teilweise oder nicht verwendet wurden, weiterzugeben oder wiederzuverwenden.

Ausführungsbeispiele schaffen einen Sendeempfänger zum Bereitstellen von Information über nicht benötigte Funkressourcen in einem Mobilkommunikationssystem. Das Mobilkommunikationssystem umfasst dabei den Sendeempfänger als ersten Sendeempfänger und zumindest einen zweiten Sendeempfänger. Der (erste) Sendeempfänger umfasst ein Sendeempfangsmodul zur Kommunikation in dem Mobilkommunikationssystem und zum Erhalten von Information über eine Gruppe von zugeteilten Funkressourcen, beispielsweise von einem Basisstations-Sendeempfänger oder allgemein von einem anderen Sendeempfänger. Der Sendeempfänger umfasst ferner ein Kontrollmodul zur Kontrolle des Sendeempfangsmoduls, wobei das Kontrollmodul ausgebildet ist, um eine Information über einen tatsächlichen Bedarf an den zugeteilten Funkressourcen zur Übertragung von Nutzdaten des ersten Sendeempfängers in dem Mobilkommunikationssystem zu bestimmen. Das Kontrollmodul ist ferner ausgebildet, um aus der Information über den tatsächlichen Bedarf an den zugeteilten Funkressourcen eine Information über für die Übertragung der Nutzdaten nicht benötigte Funkressourcen zu bestimmen, und eine Information über die nicht benötigten Funkressourcen an den zweiten Sendeempfänger zu übermitteln. Ausführungsbeispiele können so eine Bereitstellung von Information über nicht benötigte Funkressourcen erlauben und so eine effizientere Nutzung der Funkressourcen ermöglichen.

Ausführungsbeispiele schaffen ferner einen weiteren Sendeempfänger zur Kommunikation in einem Mobilkommunikationssystem. Das Mobilkommunikationssystem umfasst zumindest den oben beschriebenen Sendeempfänger als ersten Sendeempfänger und den weiteren Sendeempfänger als zweiten Sendeempfänger. Der zweite Sendeempfänger umfasst ein Sendeempfangsmodul zur Kommunikation in dem Mobilkommunikationssystem und zum Bestimmen von Information über nicht benötigte Funkressourcen von dem ersten Sendeempfänger in dem Mobilkommunikationssystem. Der zweite Sendeempfänger umfasst darüber hinaus ein Kontrollmodul zur Kontrolle des Sendeempfangsmoduls. Das Kontrollmodul ist ausgebildet, um basierend auf der Information über die nicht benötigten Funkressourcen des ersten Sendeempfängers Nutzdaten unter Nutzung der nicht benötigten Funkressourcen des ersten Sendeempfängers in dem Mobilkommunikationssystem zu übertragen. Ausführungsbeispiele können so einem Sendeempfänger die Zuteilung von nicht benötigten Funkressourcen durch einen anderen Sendeempfänger erlauben und eine effizientere Funkressourcennutzung ermöglichen.

Ausführungsbeispiele schaffen auch einen Basisstations-Sendeempfänger zur Kommunikation mit einem ersten Sendeempfänger und einem zweiten Sendeempfänger in einem Mobilkommunikationssystem. Der Basisstations-Sendeempfänger umfasst ein Sendeempfangsmodul zur Kommunikation in dem Mobilkommunikationssystem. Der Basisstations-Sendeempfänger umfasst ferner ein Kontrollmodul zur Kontrolle des Sendeempfängers. Das Kontrollmodul ist ausgebildet, um Funkressourcen zu verwalten, dem ersten Sendeempfänger eine Gruppe von Funkressourcen zuzuteilen und um von dem zweiten Sendeempfänger Nutzdaten über zumindest eine Teilgruppe der Funkressourcen zu empfangen. Insofern schaffen Ausführungsbeispiele einen Basisstations-Sendeempfänger der Nutzdaten auf Funkressourcen von einem Sendeempfänger empfangen kann, obwohl zumindest ein Teil dieser Funkressourcen einem anderen Senderempfänger zugeteilt wurde. Ausführungsbeispiele von Basisstations-Sendeempfängern können somit zu ebenfalls einer effizienteren Funkübertragung beitragen.

Ausführungsbeispiele schaffen einen ersten Sendeempfänger, der beispielsweise von einem Basisstations-Sendeempfänger Funkressourcen erhält, die zum Teil nicht benötigt werden. Die nicht benötigten Funkressourcen können an einen zweiten Sendeempfänger weitergegeben werden, der diese dann seinerseits benutzt, beispielsweise um wiederum Nutzdaten an den Basisstations-Sendeempfänger zu übertragen.

In manchen Ausführungsbeispielen kann das Kontrollmodul des ersten Sendeempfängers ferner ausgebildet sein, um vor der Übertragung der Nutzdaten Information über in seiner Umgebung befindliche und für eine Weitergabe der zugeteilten Funkressourcen geeignete zweite Sendeempfänger zu bestimmen. Insofern kann der zweite Sendeempfänger aus mehreren ausgewählt sein und der erste Sendeempfänger kann beispielsweise autonom in Reichweite befindliche zweite Sendeempfänger detektieren oder ausfindig machen. Ausführungsbeispiele können so einen Signalisierungsaufwand gering halten, da beispielsweise die Basisstation in diesem Auswahlprozess keinen Signalisierungsaufwand hat.

Die Gruppe von zugeteilten Funkressourcen kann einem von einem Basisstations-Sendeempfänger des Mobilkommunikationssystems zugeteilten Funkressourcenblock entsprechen. Der Funkressourcenblock kann beispielsweise eine kleinste von dem Basisstations-Sendeempfänger zuteilbare Funkressourcenmenge sein, z.B. ein oder mehrere PRBs in einem LTE System, je nachdem welche kleinste Einheit praktisch noch adressierbar ist. Die nicht benötigten Funkressourcen können eine Teilmenge der Gruppe von Funkressourcen sein, z.B. eine Untergruppe der Symbole oder OFDM Symbole in einem PRB in einem LTE System. In weiteren Ausführungsbeispielen kann das Kontrollmodul des ersten Sendeempfängers ausgebildet sein, um die Information über die nicht benötigten Funkressourcen an den zweiten Sendeempfänger unter Nutzung zumindest eines Teils der zugeteilten Gruppe von Funkressourcen zu übertragen. Damit ist eine Möglichkeit der Signalisierung ohne Zuweisung durch die oder Anfrage bei der Basisstation möglich. Das Kontrollmodul des ersten Sendeempfängers kann darüber hinaus ausgebildet sein, um die Nutzdaten an einen anderen Sendeempfänger unter Nutzung des gleichen oder eines anderen Teils der Gruppe der zugeteilten Funkressourcen zu übertragen. Insofern kann eine Signalisierung an den zweiten Sendeempfänger in einer Kommunikation mit einem anderen Sendeempfänger eingebunden werden, was eine schnelle und aufwandsgünstige Signalisierung ermöglichen kann.

In weiteren Ausführungsbeispielen kann das Kontrollmodul des zweiten Sendeempfängers, dem die von dem ersten Sendeempfänger nicht benötigten Ressourcen zuwiesen werden, zur Übertragung eigener Nutzdaten des zweiten Sendeempfängers ausgebildet sein. In manchen Ausführungsbeispielen kann der zweite Sendeempfänger auch als Relay-Sendeempfänger zwischen einem Basisstations-Sendeempfänger und einem weiteren Sendeempfänger des Mobilkommunikationssystem ausgebildet sein. Das Kontrollmodul des zweiten Sendeempfängers kann dann ausgebildet sein, um zumindest einen Teil der nicht benötigten Funkressourcen dem weiteren Sendeempfänger zuzuweisen und Nutzdaten des weiteren Sendeempfängers unter Nutzung der nicht benötigten Funkressourcen zu Übertragen. Ausführungsbeispiele können so auch eine effiziente Funkressourcennutzung in einem Relay-Szenario ermöglichen.

In einigen weiteren Ausführungsbeispielen kann das Kontrollmodul des zweiten Sendeempfängers auch zur Überwachung einer Kommunikation zwischen dem ersten Sendeempfänger und einem anderen Sendeempfänger ausgebildet sein. Das Erhalten der Information über die nicht benötigten Funkressourcen kann dann einem Detektieren eines Übertragungsendes einer Datenübertragung zwischen dem ersten und dem anderen Sendeempfänger entsprechen. Insofern können manche Ausführungsbeispiele eine Signalisierung zwischen dem ersten und dem zweiten Sendeempfänger durch Überwachung der Signale des ersten Sendeempfängers, die für einen anderen Sendeempfänger bestimmt sind, durch den zweiten Sendeempfänger auch ganz vermeiden bzw. erheblich reduzieren.

In weiteren Ausführungsbeispielen kann das Kontrollmodul des Basisstations-Sendeempfängers auch ausgebildet sein, um dem ersten Sendeempfänger die Gruppe von Funkressourcen zur direkten Kommunikation mit einem anderen Sendeempfänger bereitzustellen. Insofern können Ausführungsbeispiele auch eine effizientere Ressourcennutzung in D2D Szenarien ermöglichen.

Ausführungsbeispiele schaffen auch ein Verfahren für einen Sendeempfänger zum Bereitstellen von Information über nicht benötigte Funkressourcen in einem Mobilkommunikationssystem. Das Mobilkommunikationssystem umfasst den Sendeempfänger als ersten Sendeempfänger und zumindest einen zweiten Sendeempfänger. Das Verfahren umfasst ein Kommunizieren in dem Mobilkommunikationssystem und ein Erhalten von Information über eine Gruppe von zugeteilten Funkressourcen. Das Verfahren umfasst ferner ein Bestimmen von Information über einen tatsächlichen Bedarf an den zugeteilten Funkressourcen zur Übertragung von Nutzdaten des ersten Sendeempfängers in dem Mobilkommunikationssystem und ein Bestimmen von Information über für die Übertragung der Nutzdaten nicht benötigte Funkressourcen aus der Information über den tatsächlichen Bedarf. Das Verfahren umfasst auch ein Übermitteln von Information über die nicht benötigten Funkressourcen an den zweiten Sendeempfänger.

Ausführungsbeispiele schaffen ein weiteres Verfahren für einen Sendeempfänger zur Kommunikation in einem Mobilkommunikationssystem, wobei das Mobilkommunikationssystem zumindest einen weiteren Sendeempfänger als ersten Sendeempfänger und den Sendeempfänger als zweiten Sendeempfänger umfasst. Das Verfahren umfasst ein Kommunizieren in dem Mobilkommunikationssystem und ein Bestimmen von Information über nicht benötigte Funkressourcen von dem ersten Sendeempfänger in dem Mobilkommunikationssystem. Das Verfahren umfasst ferner ein Übertragen von Nutzdaten unter Nutzung der nicht benötigten Funkressourcen des ersten Sendeempfängers in dem Mobilkommunikationssystem basierend auf der Information über die nicht benötigten Funkressourcen des ersten Sendeempfängers.

Ausführungsbeispiele schaffen auch ein Verfahren für einen Basisstations-Sendeempfänger zur Kommunikation mit einem ersten Sendeempfänger und einem zweiten Sendeempfänger in einem Mobilkommunikationssystem. Das Verfahren umfasst ein Kommunizieren in dem Mobilkommunikationssystem und ein Verwalten von Funkressourcen. Das Verfahren umfasst ferner ein Zuteilen einer Gruppe von Funkressourcen an den ersten Sendeempfänger und ein Empfangen von Nutzdaten von dem zweiten Sendeempfänger über zumindest eine Teilgruppe der Funkressourcen.

Ein weiteres Ausführungsbeispiel ist ein Computerprogramm zur Durchführung zumindest eines der oben beschriebenen Verfahren, wenn das Computerprogramm auf einem Computer, einem Prozessor oder einer programmierbaren Hardwarekomponente abläuft. Ein weiteres Ausführungsbeispiel ist auch ein digitales Speichermedium, das maschinen- oder computerlesbar ist, und das elektronisch lesbare Steuersignale aufweist, die mit einer programmierbaren Hardwarekomponente so zusammenwirken können, dass eines der oben beschriebenen Verfahren ausgeführt wird.

Weitere vorteilhafte Ausgestaltungen werden nachfolgend anhand von in den Zeichnungen dargestellten Ausführungsbeispielen, auf welche Ausführungsbeispiele jedoch nicht insgesamt beschränkt sind, näher beschrieben. Es zeigen:
Fig. 1 Ausführungsbeispiele eines ersten und zweiten Sendeempfängers in einem Netzwerkszenario zusammen mit einem Ausführungsbeispiel eines Basisstations-Sendeempfängers;
Fig. 2 eine Sequenz eines Signalisierungsverlaufs in einem Ausführungsbeispiel;
Fig. 3 weitere Ausführungsbeispiele eines ersten und zweiten Sendeempfängers in einem weiteren Netzwerkszenario zusammen mit einem weiteren Ausführungsbeispiel eines Basisstations-Sendeempfängers;
Fig. 4 ein Signalisierungsschema in einem Ausführungsbeispiel in einem LTE System;
Fig. 5 ein Blockschaltbild eines Ablaufdiagramms eines Ausführungsbeispiels eines Verfahrens für einen Sendeempfänger;
Fig. 6 ein Blockschaltbild eines Ablaufdiagramms eines Ausführungsbeispiels eines weiteren Verfahrens für einen weiteren Sendeempfänger; und
Fig. 7 ein Blockschaltbild eines Ablaufdiagramms eines Ausführungsbeispiels eines Verfahrens für einen Basisstations-Sendeempfänger.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt. Optionale Komponenten sind in den Figuren mit gestrichelten Linien oder Pfeilen dargestellt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken. Gleiche Bezugszeichen bezeichnen in der gesamten Figurenbeschreibung gleiche oder ähnliche Elemente.

Man beachte, dass ein Element, das als mit einem anderen Element "verbunden", "gekoppelt" oder "verkoppelt" bezeichnet wird, mit dem anderen Element direkt verbunden, gekoppelt oder verkoppelt sein kann oder dass dazwischenliegende Elemente vorhanden sein können. Wenn ein Element dagegen als "direkt verbunden", "direkt gekoppelt" oder "direkt verkoppelt" mit einem anderen Element bezeichnet wird, sind keine dazwischenliegenden Elemente vorhanden. Andere Begriffe, die verwendet werden, um die Beziehung zwischen Elementen zu beschreiben, sollten auf ähnliche Weise interpretiert werden (z.B., "zwischen" gegenüber "direkt dazwischen", "angrenzend" gegenüber "direkt angrenzend" usw.).

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen "einer", "eine", "eines" und "der, die, das" auch die Pluralformen beinhalten, solange der Kontext nicht eindeutig etwas anderes angibt. Ferner sei klargestellt, dass die Ausdrücke wie z.B. "beinhaltet", "beinhaltend", "aufweist", "umfasst", "umfassend" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, und nicht in einem idealisierten oder übermäßig formalen Sinn zu interpretieren sind, solange dies hierin nicht ausdrücklich definiert ist.

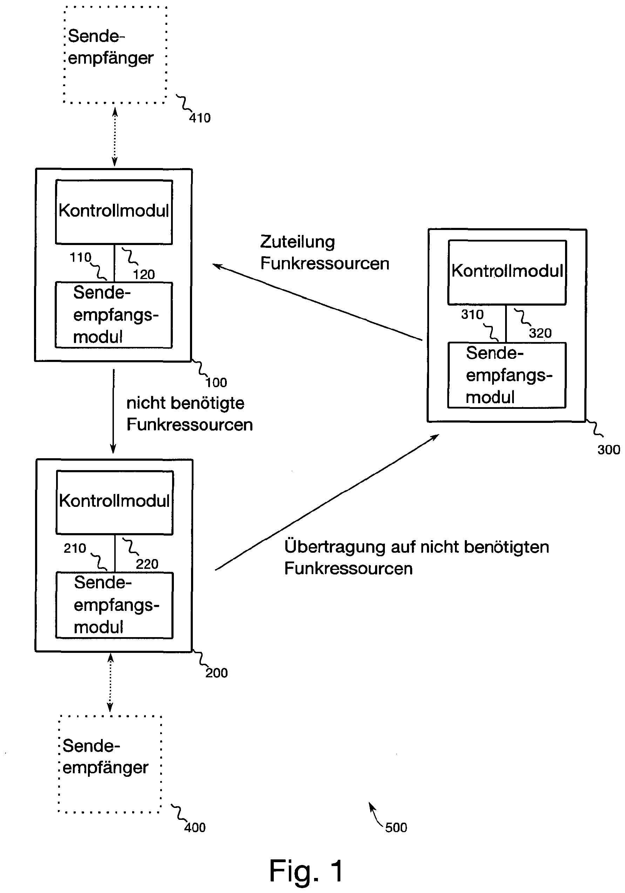

Fig. 1 illustriert Ausführungsbeispiele eines ersten und zweiten Sendeempfängers 100, 200 in einem Netzwerkszenario zusammen mit einem Ausführungsbeispiel eines Basisstations-Sendeempfängers 300. Fig. 1 zeigt den Sendeempfänger 100, der zum Bereitstellen von Information über nicht benötigte Funkressourcen in einem Mobilkommunikationssystem 500 ausgebildet ist. Das Mobilkommunikationssystem 500 umfasst den Sendeempfänger 100 als ersten Sendeempfänger 100 und zumindest den zweiten Sendeempfänger 200. In dem in der Fig. 1 gezeigten Szenario umfasst das Mobilkommunikationssystem 500 optional darüber hinaus noch den Basisstations-Sendeempfänger 300 und weitere oder andere Sendeempfänger 400, 410.

Ausführungsbeispiele können daher Sendeempfänger/Mobilfunkgeräte 100, 200, 300 bereitstellen, die zur Kommunikation von Daten über ein Mobilfunksystem 500 untereinander und/oder mit einem Server oder Computer oder einem anderen Kommunikationspartner ausgebildet sind, der beispielsweise über Internet bzw. das World Wide Web (WWW) oder ein anderes Netz erreichbar ist. Das Mobilfunksystem/-kommunikationssystem 500 kann beispielsweise einem der Mobilfunksysteme entsprechen, die von entsprechenden Standardisierungsgremien, wie z.B. der 3GPP-Gruppe, standardisiert werden. Beispielsweise umfassen diese das Global System for Mobile Communications (GSM), Enhanced Data Rates for GSM Evolution (EDGE), GSM EDGE Radio Access Network (GERAN), das Universal Terrestrial Radio Access Network (UTRAN) oder das Evolved UTRAN (E-UTRAN), wie z. B. das Universal Mobile Telecommunication System (UMTS), Long Term Evolution (LTE) oder LTE-Advanced (LTE-A), oder auch Mobilfunksysteme anderer Standards, wie z. B. das Worldwide Interoperability for Microwave Access (WIMAX), IEEE802.16 oder Wireless Local Area Network (WLAN), IEEE802.11, sowie generell ein System, das auf einem Zeitbereichsvielfachzugriffsverfahren (Time Division Multiple Access (TDMA)), Frequenzbereichsvielfachzugriffsverfahren (Frequency Division Multiple Access (FDMA)), Kodebereichsvielfachzugriffsverfahren (Code Division Multiple Access (CDMA)), orthogonalen Frequenzbereichsvielfachzugriffsverfahren (Orthogonal Frequency Division Multiple Access (OFDMA)) oder einer anderen Technologie bzw. Vielfachzugriffverfahren basiert. Im Folgenden werden die Begriffe Mobilfunksystem, Mobilkommunikationssystem, Mobilfunknetz, mobiles Kommunikationssystem und Mobilfunknetzwerk synonym benutzt.

Insofern betreffen die hierin beschriebenen Funkressourcen ein oder mehrere Elemente der Gruppe von Frequenzressourcen, z.B. Träger oder Unterträger, Bänder oder Unterbänder (auch engl. bands, sub-bands, carriers, sub-carriers), usw., Zeitressourcen, z.B. Zeitschlitze, Funkrahmen, Symbole (auch engl. frames, sub-frames, slots, symbols) usw., Coderessourcen, z.B. orthogonale Codes, Verwürfelungscodes, Kanalcodes (auch engl. channelization codes, scrambling codes, orthogonal variable spreading factor codes) usw., oder räumliche Ressourcen, wie z.B. räumliche Kanäle oder Unterkanäle, Richtungen, Antennen (auch engl. spatial channels, spatial subchannels, beams, antennae) usw. Beispielsweise kann ein im LTE verwendeter PRB eine Gruppe von Funkressourcen darstellen.

Ein Basisstations-Sendeempfänger 300 oder eine Basisstation (diese Begriffe können äquivalent verwendet werden) kann ausgebildet sein, um mit einem oder mehreren aktiven Mobilfunkgeräten zu kommunizieren, und um in oder benachbart zu einem Versorgungs- oder Abdeckungsbereich eines anderen Basisstations-Sendeempfängers oder einer Basisstation zu kommunizieren, z.B. als Makrozell-Basisstation oder als Kleinzell-Basisstation. Somit können Ausführungsbeispiele ein Mobilkommunikationssystem 500 mit einem oder mehreren Mobilfunkendgeräten und einer oder mehreren Basisstationen 300 umfassen, wobei die Basisstations-Sendempfänger 300 Makrozellen oder kleine Zellen bereitstellen können, z. B. Pico-, Metro- oder Femto-Zellen. Ein mobiler Sendeempfänger oder Mobilfunkendgerät kann einem Smartphone (intelligentes Telefon), einem Handy, einem Benutzergerät, einem Funkgerät, einer Mobilen, einer Mobilstation, einem Laptop, einem Notebook, einem Personal Computer (PC), einem Personal Digital Assistant (PDA), einem Universal Serial Bus (USB)-Stick oder-Adapter, einem Mobilfunkmodem, einem Auto, etc., entsprechen. Ein mobiler Sendeempfänger kann auch als engl. "User Equipment (UE)" oder Mobile im Einklang mit der 3GPP- Terminologie bezeichnet werden.

Ein Basisstations-Sendeempfänger 300 oder eine Basisstation kann sich zumindest aus der Sicht eines Mobilfunkendgerätes in einem feststehenden oder zumindest festverbundenen Teil des Netzwerks oder Systems befinden. Ein Basisstations-Sendeempfänger oder eine Basisstation kann auch einem Remote Radio Head, einer Relay-Station, einem Übertragungspunkt, einem Zugriffspunkt (auch engl. "Access Point"), einem Funkgerät, einer Makrozelle, einer kleinen Zelle, einer Mikrozelle, einer Femtozelle, einer Metrozelle usw. entsprechen. Eine Basisstation 300 oder ein Basisstations-Sendeempfänger wird somit als logisches Konzept eines Knotens/einer Einheit zur Bereitstellung eines Funkträgers oder von Funkverbindungen über die Luftschnittstelle verstanden, über den oder die einem Endgerät/mobile Sendeempfänger Zugang zu einem Mobilfunknetz verschafft wird.

Eine Basisstation oder ein Basisstations-Sendeempfänger kann eine drahtlose Schnittstelle für Mobilfunkendgeräte zu einem verdrahteten Netzwerk darstellen. Die verwendeten Funksignale können durch 3GPP standardisierte Funksignale sein oder allgemein Funksignale in Übereinstimmung mit einer oder mehreren der oben genannten Systeme. So kann eine Basisstation oder ein Basisstations-Sendeempfänger einer NodeB, einer eNodeB, einer Base Transceiver Station (BTS), einen Zugangspunkt, einen Remote Radio Head, einem Übertragungspunkt, einer Relay-Station, etc. entsprechen, die in weitere Funktionseinheiten unterteilt sein kann.

Ein Mobilfunkendgerät oder mobiler Sendeempfänger kann einer Basisstation oder Zelle zugeordnet werden oder bei dieser registriert sein. Der Begriff Zelle bezieht sich auf einen Abdeckungsbereich der Funkdienste, die durch eine Basisstation bereitgestellt werden, z.B. von einer NodeB (NB), einer eNodeB (eNB), einem Remote Radio Head, einem Übertragungspunkt, eine Relay-Station, etc. Eine Basisstation kann eine oder mehrere Zellen auf einer oder mehreren Trägerfrequenzen bereitstellen. In manchen Ausführungsformen kann eine Zelle auch einem Sektor entsprechen. Z.B. können Sektoren mit Sektorantennen, die zur Abdeckung eines Winkelabschnitts um einen Antennenstandort herum ausgebildet sind, gebildet werden. In einigen Ausführungsformen kann eine Basisstation beispielsweise zum Betrieb von drei oder sechs Zellen oder Sektoren ausgelegt sein (z.B. 120° im Fall von drei Zellen und 60° im Fall von sechs Zellen). Eine Basisstation kann mehrere Sektorantennen umfassen. Im Folgenden können die Begriffe Zelle und Basisstation auch synonym verwendet werden. Darüber hinaus können feste und mobile Basisstationen unterschieden werden, wobei mobile Basisstationen auch als mobile Relay-Stationen fungieren können.

Der Sendeempfänger 100, der in der Fig.1 illustriert ist, kann somit in verschiedenen Ausführungsbeispielen ein Basisstations-Sendeempfänger, ein Relay-Sendeempfänger oder ein mobiler Sendeempfänger sein. Der Sendeempfänger 100 umfasst ein Sendeempfangsmodul 110 zur Kommunikation in dem Mobilkommunikationssystem 500 und zum Erhalten von Information über eine Gruppe von zugeteilten Funkressourcen. In Ausführungsbeispielen kann das Sendeempfangsmodul 110, selbiges gilt auch für die Sendeempfangsmodule 210 und 310 die im Folgenden näher beschrieben werden, typische Sender- bzw. Empfängerkomponenten enthalten. Darunter können beispielsweise ein oder mehrere Antennen, ein oder mehrere Filter, ein oder mehrere Mischer, ein oder mehrere Verstärker, ein oder mehrere Diplexer, ein oder mehrere Duplexer, usw. fallen. Vorliegend ermöglichen die Sendeempfangsmodule 110, 210, 310 die Kommunikation in dem Mobilkommunikationssystem 500.

Wie die Fig. 1 weiter zeigt, umfasst der Sendeempfänger 100 ein Kontrollmodul 120, das mit dem Sendeempfangsmodul 110 gekoppelt ist. In Ausführungsbeispielen kann das Kontrollmodul 120 einem beliebigen Controller oder Prozessor oder einer programmierbaren Hardwarekomponente entsprechen. Beispielsweise kann das Kontrollmodul 120 auch als Software realisiert sein, die für eine entsprechende Hardwarekomponente programmiert ist. Insofern kann das Kontrollmodul 120 als programmierbare Hardware mit entsprechend angepasster Software implementiert sein. Dabei können beliebige Prozessoren, wie Digitale Signalprozessoren (DSPs) zum Einsatz kommen. Ausführungsbeispiele sind dabei nicht auf einen bestimmten Typ von Prozessor eingeschränkt. Es sind beliebige Prozessoren oder auch mehrere Prozessoren zur Implementierung des Kontrollmoduls 120 denkbar. Das über die Implementierung des Kontrollmoduls 120 Gesagte, gilt auch für die Implementierung der im Folgenden noch näher beschriebenen Kontrollmodul 220 und 320.

Das Kontrollmodul 120 ist zur Kontrolle des Sendeempfangsmoduls 110 ausgebildet. Das Kontrollmodul 120 ist ferner angepasst, um eine Information über einen tatsächlichen Bedarf an den zugeteilten Funkressourcen zur Übertragung von Nutzdaten des ersten Sendeempfängers 100 in dem Mobilkommunikationssystem 500 zu bestimmen. Aus der Information über den tatsächlichen Bedarf an den zugeteilten Funkressourcen kann das Kontrollmodul 120 eine Information über für die Übertragung der Nutzdaten nicht benötigte Funkressourcen bestimmen, und eine Information über die nicht benötigten Funkressourcen an den zweiten Sendeempfänger 200 übermitteln.

Der zweite Sendeempfänger 200 in der Fig. 1 ist ebenfalls zur Kommunikation in dem Mobilkommunikationssystem 500 ausgebildet. Der zweite Sendeempfänger 200 umfasst ein Sendeempfangsmodul 210, das mit einem Kontrollmodul 220 gekoppelt ist. Bzgl. der Implementierung dieser Komponenten wird auf die obige Beschreibung des Sendeempfangsmoduls 110 und des Kontrollmoduls 120 verwiesen. Das Sendeempfangsmodul 210 des zweiten Sendeempfängers 200 ist zur Kommunikation in dem Mobilkommunikationssystem 500 und zum Bestimmen von Information über nicht benötigte Funkressourcen des ersten Sendeempfängers 100 in dem Mobilkommunikationssystem 500 ausgebildet. Das Kontrollmodul 220 ist zur Kontrolle des Sendeempfangsmoduls 210 angepasst. Das Kontrollmodul 220 ist ferner ausgebildet, um basierend auf der Information über die nicht benötigten Funkressourcen des ersten Sendeempfängers 100 Nutzdaten unter Nutzung der nicht benötigten Funkressourcen des ersten Sendeempfängers 100 in dem Mobilkommunikationssystem 500 zu übertragen. Die Fig. 1 illustriert diese Übertragung an den Basisstations-Sendeempfänger 300, in anderen Ausführungsbeispielen kann die Übertragung auch an andere Sendeempfänger erfolgen, beispielsweise an den in der Fig. 1 als optional dargestellten weiteren Sendeempfänger 400.

Schließlich illustriert die Fig.1 auch noch ein Ausführungsbeispiel eines Basisstations-Sendeempfängers 300. Der Basisstations-Sendeempfänger 300 ist zur Kommunikation mit dem ersten Sendeempfänger 100 und dem zweiten Sendeempfänger 200 in dem Mobilkommunikationssystem 500 ausgebildet. Der Basisstations-Sendeempfänger 300 umfasst ein Sendeempfangsmodul 310 und ein damit gekoppeltes Kontrollmodul 320 die gemäß obiger Beschreibung für das Sendeempfangsmodul 110 und das Kontrollmodul 120 implementiert sein können. Das Sendeempfangsmodul 310 ist zur Kommunikation in dem Mobilkommunikationssystem 500 angepasst. Das Kontrollmodul 320 ist zur Kontrolle des Sendeempfangsmoduls 310 angepasst, um Funkressourcen zu verwalten und um dem ersten Sendeempfänger 100 eine Gruppe von Funkressourcen zuzuteilen. Das Kontrollmodul ist ferner ausgebildet, um von dem zweiten Sendeempfänger 200 Nutzdaten über zumindest eine Teilgruppe der Funkressourcen zu empfangen.

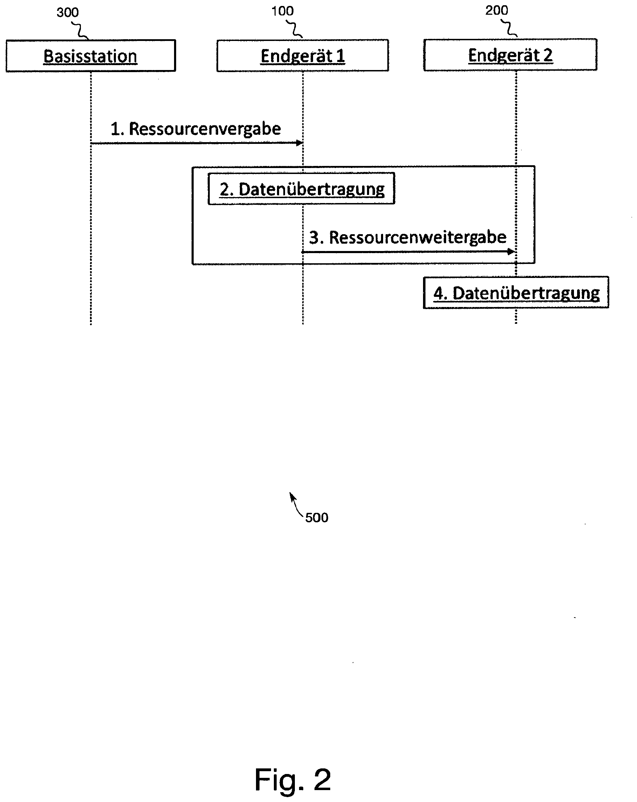

Ein Kerngedanke von Ausführungsbeispielen besteht in der Weitergabe ungenutzter Funkressourcen, um die Effizienz des Kommunikationssystems 500 zu erhöhen. Die Weitergabe der Ressourcen kann in einem Ausführungsbeispiel in zwei Schritten erfolgen. Zunächst kann die Vergabe der Ressourcen an ein mobiles Endgerät, z.B. Sendeempfänger 100, durch die Basisstation 300 erfolgen. In einem zweiten Schritt wird dann der nicht benötigte Teil der Ressourcen durch das Endgerät oder den Sendeempfänger 100 selbst an ein zweites Endgerät 200 weitergegeben. Fig. 2 zeigt eine Sequenz oder Ablaufplan eines Signalisierungsverlaufs in einem Ausführungsbeispiel.

Die Fig. 2 zeigt, in Anlehnung an das Ausführungsbeispiel aus der Fig. 1, links den Basisstations-Sendeempfänger 300, in der Mitte den Sendeempfänger 100 der als Endgerät implementiert ist (auch "Endgerät 1") und rechts den Sendeempfänger 200, der ebenfalls als Endgerät (auch "Endgerät 2") implementiert ist. Fig. 2 zeigt eine mögliche Realisierung eines Ausführungsbeispiels eines Verfahrens. In einem ersten Schritt erfolgt eine Ressourcenvergabe durch die Basisstation 300, z.B. die Zuteilung einer Gruppe von Funkressourcen. Die Basisstation 300 vergibt die Funkressourcen an ein mobiles Endgerät 100 über die entsprechenden Mechanismen des Systems 500. In einem zweiten Schritt erfolgt eine Datenübertragung durch den Sendeempfänger 100, "Endgerät 1". Der Sendeempfänger 100, "Endgerät 1", überträgt seine eigenen Nutzdaten. In einem dritten Schritt erfolgt die Weitergabe der nicht verwendeten Ressourcen an den Sendeempfänger 200, "Endgerät 2". Kombiniert mit der Datenübertragung in Schritt 2 erfolgt die Weitergabe der ungenutzten Ressourcen an den Sendeempfänger 200, "Endgerät 2". Die Auswahl eines passenden Endgeräts für die Weitergabe kann durch den ursprünglichen Ressourcenempfänger (Sendeempfänger 100, Endgerät 1), durch den Empfänger der weitergegebenen Ressourcen (Sendeempfänger 200, Endgerät 2) oder unterstützt durch die Basisstation 300 erfolgen. Darüber hinaus kann eine Weitergabe der Ressourcen außer an Endgeräte auch an untergeordnete Basisstationen (z.B. Femtozelle, Relaystation oder Home eNB, Implementierungen der ersten und/oder zweiten Sendeempfänger 100, 200) erfolgen. In einem vierten Schritt kann dann eine Datenübertragung durch den zweiten Sendeempfänger 200, "Endgerät 2", erfolgen. Der zweite Sendeempfänger 200 (Endgerät 2) überträgt seine eigenen Nutzdaten unter Benutzung der ihm weitergegebenen Funkressourcen.

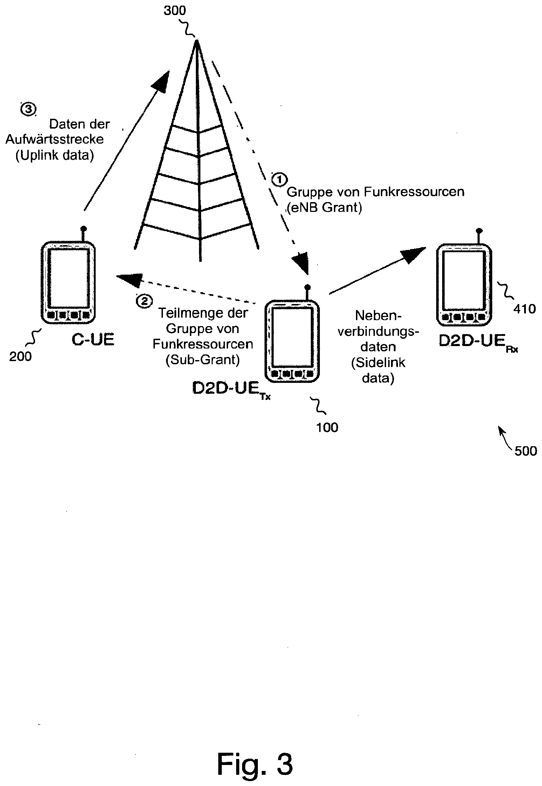

Fig. 3 stellt weitere Ausführungsbeispiele eines ersten und zweiten Sendeempfängers 100, 200 in einem weiteren Netzwerkszenario zusammen mit einem Ausführungsbeispiel eines weiteren Basisstations-Sendeempfängers 300 dar. Die Fig. 3 zeigt ein Mobilkommunikationssystem 500 mit einem ersten Sendeempfänger 100, der hier als Endgerät implementiert ist, einem zweiten Sendeempfänger 200, der ebenfalls als Endgerät implementiert ist und einem anderen Sendeempfänger 410, der auch als Endgerät implementiert ist. Das Mobilkommunikationssystem 500 zeigt ferner ein Ausführungsbeispiel 300 eines Basisstations-Sendeempfängers 300. Im Folgenden wird die Anwendung der Ausführungsbeispiele in einem LTE System beschrieben und auf die Effizienzverbesserung der Mobilfunkübertragung eingegangen.

Fig. 3 zeigt eine typische Situation in einem zukünftigen LTE-Übertragungssystem. In diesem Szenario sollen die Ressourcen einer D2D-Übertragung zwischen einer D2D-UETx, dem Sendeempfänger 100, und einer D2D-UERx, dem anderen Sendeempfänger 410, als Nebenverbindungsdaten (auch engl. Sidelink data) von einer anderen Übertragung zwischen einer C-UE (zellularen/cellular UE), dem zweiten Sendeempfänger 200, und der Basisstation 300 (Uplink data) weitergegeben werden.

In einem Vorbereitungsschritt (nicht dargestellt in Fig. 3) ermittelt die sendende Mobilfunkstation (D2D-UETx) 100 die sich in ihrer Umgebung befindenden Nachbarteilnehmer, z.B. C-UE 200. In diesem Ausführungsbeispiel ist das Kontrollmodul 120 des ersten Sendeempfängers 100 ferner ausgebildet ist, um vor der Übertragung der Nutzdaten Information über in seiner Umgebung befindliche und für Weitergabe der zugeteilten Funkressourcen geeignete zweite Sendeempfänger 200 zu bestimmen. Das Ausführungsbeispiel eines Verfahrens verläuft damit folgendermaßen:
In einem ersten Schritt (eingekreiste 1 in Fig. 3) stellt der Basisstations-Sendeempfänger 300, hier eine eNB (eNadeB), den beteiligten Mobilfunkstationen, hier den Sendeempfängern 100, 410 die erforderlichen Ressourcen zur D2D-Kommunikation zwischen D2D-UETx 100 und D2D-UERx 410 in Form eines eNB-Grants zur Verfügung. In diesem Ausführungsbeispiel ist das Kontrollmodul 320 des Basisstations-Sendeempfängers 300 ausgebildet, um dem ersten Sendeempfänger 100 die Gruppe von Funkressourcen (eNB Grant) zur direkten Kommunikation mit dem anderen Sendeempfänger 410 bereitzustellen. Diese Information enthält neben der Information zu den verwendeten Modulations- und Codierungsverfahren die zugeteilten Ressourcenblöcke, welche für die D2D-Übertragung verwendet werden können. Zur Verminderung des Signalisierungs-Overhead (Überschuss, Mehraufwand) kann dies eine permanente Zuteilung darstellen.

In einem zweiten Schritt (eingekreiste 2 in Fig. 3) stellt die sendende D2D-UETx 100 beispielsweise während einer D2D-Übertragung fest, dass sie nicht den gesamten Ressourcen Block für Ihre Übertragung benötigt. Sie informiert den vorher ausgewählten Nachbarteilnehmer (C-UE) 200 über die weitergegebenen Ressourcenanteile durch Verwendung eines Sub-Grant, also einer Teilmenge der Gruppe von Funkressourcen. In diesem Ausführungsbeispiel entspricht die Gruppe von zugeteilten Funkressourcen (eNB Grant) einem von dem Basisstations-Sendeempfänger 300 des Mobilkommunikationssystems 500, hier LTE, zugeteilten Funkressourcenblock, ein PRB. Der Funkressourcenblock entspricht hier einer kleinsten von dem Basisstations-Sendeempfänger 300 zuteilbaren Funkressourcenmenge. Die nicht benötigten Funkressourcen entsprechen einer Teilmenge der Gruppe von Funkressourcen (Sub-Grant).

Hierbei ist zu beachten, dass die kleinste von dem Basisstations-Sendeempfänger 300 zuteilbare Funkressourcenmenge nicht ausschließlich durch den Standard des jeweiligen Mobilkommunikationssystems vorgegeben ist. Beispielsweise kann die kleinste zuteilbare Menge laut Spezifikation eines Standards je nach Systemkonfiguration oder Parametrisierung nicht adressierbar sein und die kleinste zuteilbare Ressourcenmenge kann daher der kleinsten adressierbaren Funkressourcenmenge entsprechen. In manchen Ausführungsbeispielen kann die kleinste zuteilbare Funkressourcenmenge auch auf Grund von Kapazitätsengpässen für die Signalisierung der Zuteilung beschränkt sein. Dies könnte beispielsweise in einem LTE-System mit 20 MHz Bandbreite (und damit insgesamt 100 PRBs) der Fall sein. In diesem System könnten in jedem TTI theoretisch 100 Sendeempfänger gleichzeitig Daten sowohl im Uplink als auch im Downlink übertragen. Bei der Benutzung eines dynamischen Scheduling (Ressourcenzuweisung) müssten hierfür aber auch in jedem TTI die notwendigen Signalisierungsinformationen (Scheduling Grant) im dafür vorgesehen Übertragungskanal (PDCCH, Physical Downlink Control CHannel) übermittelt werden. Da dieser hinsichtlich seiner Kapazität jedoch begrenzt ist und auch nicht ausschließlich zur Signalisierung von Zugriffsrechten genutzt wird, kann nur eine gewisse Anzahl an Scheduling Grants pro TTI übertragen werden, bzw. es werden mehrere PRB als kleinste zuteilbare Funkressourcenmenge auf einmal zugewiesen, z.B. 5 PRBs, die dann in Ausführungsbeispielen entsprechend weitergereicht werden können.

Die von der eNB zugeteilte Ressource ist also nicht zwangsläufig die kleinste zuteilbare Funkressourcenmenge im Sinne eines theoretisch möglichen oder im Sinne einer von einem Standard vorgegebenen kleinesten Granularität um dann weitergegeben werden zu können. Es kann auch vorkommen, dass beispielsweise eine eNB z.B. 5 PRBs zuteilt (z.B. weil der PDCCH sowieso keine weiteren Grants transportieren könnte) und davon 4.5 PRB weitergegeben werden. Insofern entspricht die kleinste Funkressourcenmenge der tatsächlich oder in der Praxis kleinsten zuweisbaren/zuteilbaren Funkressourcenmenge.

In einem dritten Schritt (eingekreiste 3 in Fig. 3) verwendet der ausgewählte Teilnehmer C-UE 200 diese Ressourcenzuteilung um z.B. Daten zum eNodeB 300 zu senden (Uplink data, Daten der Aufwärtsstrecke). Die Übermittlung der weitergegebenen Ressource kann auf mehreren Wegen geschehen. Eine einfache Methode besteht darin, dass die C-UE 200 die zugeteilte D2D-Ressource (eNB-Grant) und die D2D-Datenübertragung (Sidelink data) autonom überwacht. Bei Feststellen des Endes einer D2D-Datenübertragung kann somit die C-UE 200 die verbliebenen Ressourcen für Ihre eigene Übertragung verwenden. Das Kontrollmodul 220 des zweiten Sendeempfängers 200 ist dann zur Überwachung einer Kommunikation zwischen dem ersten Sendeempfänger 100 und einem anderen Sendeempfänger 410 ausgebildet. Das Bestimmen der Information über die nicht benötigten Funkressourcen entspricht dann einem Detektieren eines Übertragungsendes einer Datenübertragung zwischen dem ersten Sendeempfänger 100 und dem anderen Sendeempfänger 410. Solche Ausführungsbeispiele können Vorteile bei D2D-Übertragungen bieten, bei welchen die D2D-UETx 100 nicht im Voraus das Ende der Datenübertragung feststellen kann, wie es bei zeitkritischen Anwendungen der Fall ist. Auf der anderen Seite ist hierbei ein höherer Aufwand in der C-UE 200 zur Detektion des Endes der D2D-Übertragung erforderlich.

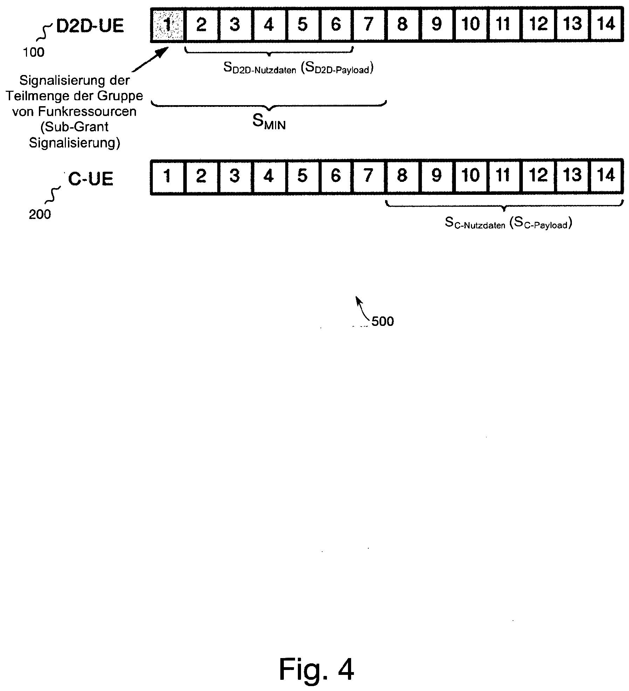

In anderen Ausführungsbeispielen kann, insbesondere für weniger zeitkritische D2D-Übertragungen, eine explizite Signalisierung des Sub-Grants von der D2D-UETx 100 zur ausgewählten C-UE 200 erfolgen. Fig. 4 zeigt ein Signalisierungsschema in einem Ausführungsbeispiel in einem LTE System. In Fig. 4 ist eine mögliche Änderung des Datenformats der D2D-UE 100 zur Übertragung des Sub-Grant gezeigt. Fig. 4 zeigt zwei Übertragungsintervalle (TTIs) zu je 14 von links nach rechts durchnummerierten Symbolen (2 "slots" zu je 7 OFDM Symbolen) in dem LTE System 500. In der Fig. 4 oben ist das Übertragungsintervall für den Sendeempfänger 100, D2D-UE, dargestellt, und unten das Übertragungsintervall für den Sendeempfänger 200, C-UE. Im gezeigten Beispiel wird ein Teil des ersten zu übertragenen OFDM-Symbols zur Signalisierung des Sub-Grants verwendet. Die zu übertragende Information enthält z.B. einen Indikator, beispielsweise ein oder mehrere Bits, für die Verfügbarkeit des betreffenden Ressourcenblocks für eine Wiedernutzung, eine Identifikationsnummer für die ausgewählte C-UE 200 sowie eine Information zum OFDM-Symbol ab welchem der Ressourcenblock wiederverwendet werden kann. Somit kann die identifizierte C-UE 200 ihre Nutzdaten (Payload) S_{C-Payload} ab dem angegebenen Symbol (hier als Beispiel ab dem 8. Symbol) übertragen, nachdem die Übertragung des ersten Sendeempfängers 100, S_{D2D-Payload}, beendet ist. In der Fig. 4 ist das siebte OFDM-Symbol nicht belegt und bildet eine Art Sicherheitsabstand (auch engl. guard interval), um Interferenzen zwischen den beiden Übertragungen zu vermeiden. Es ergibt sich ein Intervall von 7 OFDM Symbolen, S_{MIN}, bevor die Übertragung des zweiten Sendeempfängers 200 beginnt.

In diesem Ausführungsbeispiel ist das Kontrollmodul 120 des ersten Sendeempfängers 100, D2D-UE, ausgebildet, um die Information über die nicht benötigten Funkressourcen an den zweiten Sendeempfänger 200, C-UE, unter Nutzung zumindest eines Teils der zugeteilten Gruppe von Funkressourcen (PRB) zu übertragen. Das Kontrollmodul 120 des ersten Sendeempfängers 100 ist ferner ausgebildet, um die Nutzdaten S_{D2D-Payload} an einen anderen Sendeempfänger 410, vgl. Fig. 1, unter Nutzung des gleichen oder eines anderen Teils der Gruppe der zugeteilten Funkressourcen (hier die ersten sechs OFDM Symbole) zu übertragen.

Zusätzlich zu der in diesem Ausführungsbeispiel beschriebenen Weitergabe von Ressourcen von einem D2D-UE 100 zu einem C-UE 200 kann diese auch umgekehrt, also von einem C-UE 200 zu einem D2D-UE 100, oder zwischen zwei UEs gleichen Typs erfolgen. In weiteren Ausführungsbeispielen ist auch eine Verkettung oder eine Kaskade denkbar, in der Teilmengen der zugeteilten Radioressourcen über mehrere Stationen, Sendeempfänger, weitergereicht werden. Wie die Fig. 3 zeigt, ist in manchen Ausführungsbeispielen das Kontrollmodul 220 des zweiten Sendeempfängers 200 zur Übertragung eigener Nutzdaten des zweiten Sendeempfängers 200 ausgebildet, in Fig. 3 an den Basisstations-Sendeempfänger 300. In weiteren Ausführungsbeispielen kann der zweite Sendeempfänger 200 als Relay-Sendeempfänger zwischen einem Basisstations-Sendeempfänger 300 und einem weiteren Sendeempfänger 400 des Mobilkommunikationssystem 500 ausgebildet sein. Ein solches Ausführungsbeispiel ist in der Fig. 1 durch den gestrichelt gezeigten weiteren Sendeempfänger 400 angedeutet. Das Kontrollmodul 220 des zweiten Sendeempfängers 200 ist dann ausgebildet, um zumindest einen Teil der nicht benötigten Funkressourcen dem weiteren Sendeempfänger 400 zuzuweisen und Nutzdaten des weiteren Sendeempfängers 400 unter Nutzung der nicht benötigten Funkressourcen zu Übertragen.

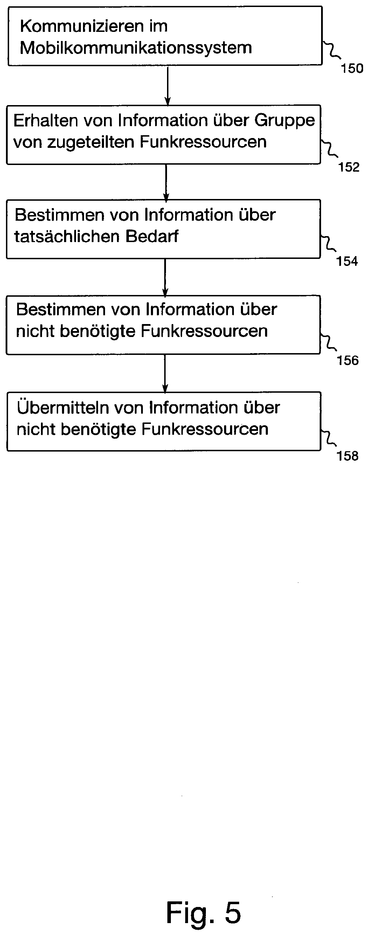

Fig. 5 zeigt ein Blockschaltbild eines Ablaufdiagramms eines Ausführungsbeispiels eines Verfahrens für einen ersten Sendeempfänger. Das Verfahren für den ersten Sendeempfänger 100 stellt Information über nicht benötigte Funkressourcen in einem Mobilkommunikationssystem 500 bereit. Das Mobilkommunikationssystem 500 umfasst den Sendeempfänger 100 als ersten Sendeempfänger 100 und zumindest einen zweiten Sendeempfänger 200. Das Verfahren umfasst ein Kommunizieren 150 in dem Mobilkommunikationssystem 500 und ein Erhalten 152 von Information über eine Gruppe von zugeteilten Funkressourcen. Das Verfahren umfasst ferner ein Bestimmen 154 von Information über einen tatsächlichen Bedarf an den zugeteilten Funkressourcen zur Übertragung von Nutzdaten des ersten Sendeempfängers 100 in dem Mobilkommunikationssystem 500, und ein Bestimmen 156 von Information über für die Übertragung der Nutzdaten nicht benötigte Funkressourcen aus der Information über den tatsächlichen Bedarf. Das Verfahren umfasst darüber hinaus ein Übermitteln 158 von Information über die nicht benötigten Funkressourcen an den zweiten Sendeempfänger 200.

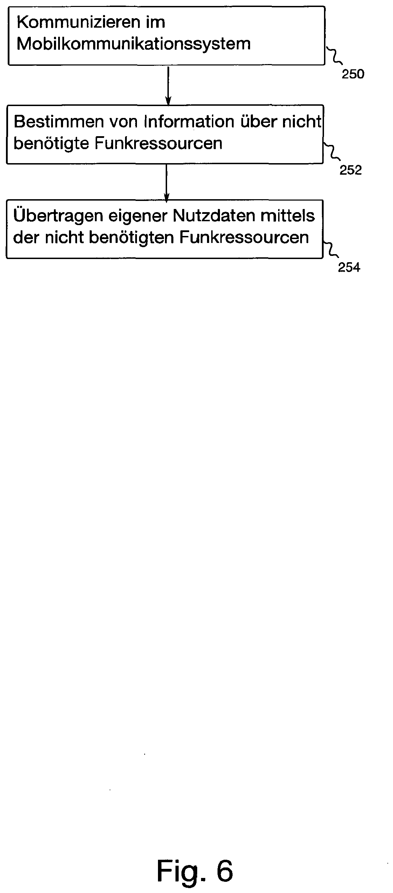

Fig. 6 zeigt ein Blockschaltbild eines Ablaufdiagramms eines Ausführungsbeispiels eines weiteren Verfahrens für einen zweiten Sendeempfänger 200. Das Verfahren für den zweiten Sendeempfänger 200 ermöglicht eine Kommunikation in einem Mobilkommunikationssystem 500. Das Mobilkommunikationssystem 500 umfasst wieder zumindest einen weiteren Sendeempfänger 100 als ersten Sendeempfänger 100 und den zweiten Sendeempfänger 200. Das Verfahren umfasst ein Kommunizieren 250 in dem Mobilkommunikationssystem 500 und ein Bestimmen 252 von Information über nicht benötigte Funkressourcen von dem ersten Sendeempfänger 100 in dem Mobilkommunikationssystem 500. Das Verfahren umfasst ferner ein Übertragen 254 von Nutzdaten unter Nutzung der nicht benötigten Funkressourcen des ersten Sendeempfängers 100 in dem Mobilkommunikationssystem 500 basierend auf der Information über die nicht benötigten Funkressourcen des ersten Sendeempfängers 100.

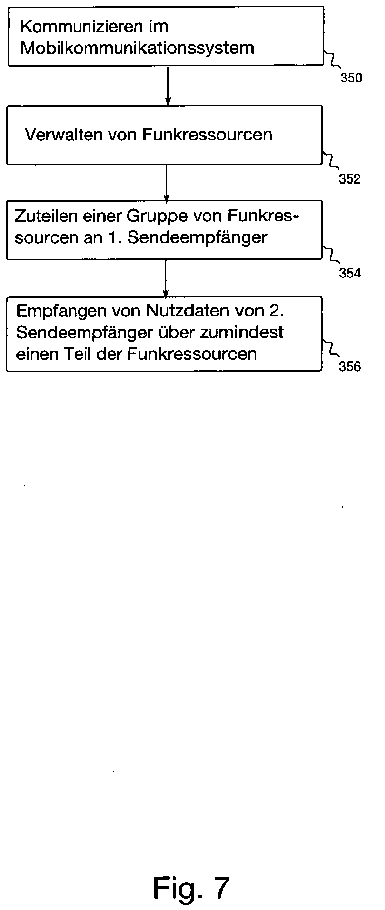

Fig. 7 zeigt ein Blockschaltbild eines Ablaufdiagramms eines Ausführungsbeispiels eines Verfahrens für einen Basisstations-Sendeempfänger 300. Das Verfahren für den Basisstations-Sendeempfänger 300 ermöglicht eine Kommunikation mit einem ersten Sendeempfänger 100 und einem zweiten Sendeempfänger 200 in einem Mobilkommunikationssystem 500. Das Verfahren umfasst ein Kommunizieren 350 in dem Mobilkommunikationssystem 500 und ein Verwalten 352 von Funkressourcen. Das Verfahren umfasst ein Zuteilen 354 einer Gruppe von Funkressourcen an den ersten Sendeempfänger 100 und Empfangen 356 von Nutzdaten von einem zweiten Sendeempfänger 200 über zumindest eine Teilgruppe der Funkressourcen.

Weitere Ausführungsbeispiele sind Computerprogramme mit einem Programmcode zur Durchführung zumindest eines der oben beschriebenen Verfahren, wenn der Programmcode auf einem Computer, einem Prozessor oder einer programmierbaren Hardwarekomponente ausgeführt wird. Ein weiteres Ausführungsbeispiel ist auch ein digitales Speichermedium, das maschinen- oder computerlesbar ist, und das elektronisch lesbare Steuersignale aufweist, die mit einer programmierbaren Hardwarekomponente so zusammenwirken können, dass eines der oben beschriebenen Verfahren ausgeführt wird.

Ausführungsbeispiele schaffen beispielsweise eine Verteilung der Entscheidungen zur Funkressourcenvergabe bzw. Nutzung zwischen Basisstation und mobilen Endgerät. Dabei kann die Weitergabe der gesamten Funkressourcen oder von Teilen dieser Funkressourcen zwischen mobilen Endgeräten ermöglicht werden. Manche Ausführungsbeispiele können die Übertragung der Nutzerdaten sowie die Weitergabe der Kontrollinformation zur Ressourcennutzung am mobilen Endgerät kombinieren. Kombinationen mit anderen Technologien sind ebenfalls denkbar, bspw. mit TTI-Shortening zur Reduzierung der Latenz oder mit Frequenzsprungverfahren zur Steigerung der Zuverlässigkeit. Insgesamt können Ausführungsbeispiele eine verbesserte Effizienz bei der Datenübertragung in Mobilkommunikationsnetzen ermöglichen, da nicht benötigte Funkressourcen nicht einfach ungenutzt bleiben, sondern an andere Teilnehmer weitergegeben und durch diese zur Übertragung eigener Daten verwendet werden können.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Sendeempfänger (100) zum Bereitstellen von Information über nicht benötigte Funkressourcen in einem Mobilkommunikationssystem (500), wobei das Mobilkommunikationssystem (500) den Sendeempfänger (100) als ersten Sendeempfänger (100) und zumindest einen zweiten Sendeempfänger (200) umfasst, mit einem Sendeempfangsmodul (110) zur Kommunikation in dem Mobilkommunikationssystem (500) und zum Erhalten von Information über eine Gruppe von zugeteilten Funkressourcen; und
einem Kontrollmodul (120) zur Kontrolle des Sendeempfangsmoduls (110), wobei das Kontrollmodul ausgebildet ist, um
eine Information über einen tatsächlichen Bedarf an den zugeteilten Funkressourcen zur Übertragung von Nutzdaten des ersten Sendeempfängers (100) in dem Mobilkommunikationssystem (500) zu bestimmen,
aus der Information über den tatsächlichen Bedarf an den zugeteilten Funkressourcen eine Information über für die Übertragung der Nutzdaten nicht benötigte Funkressourcen zu bestimmen, und
eine Information über die nicht benötigten Funkressourcen an den zweiten Sendeempfänger (200) zu übermitteln,
wobei die Gruppe von zugeteilten Funkressourcen einem von einem Basisstations-Sendeempfänger (300) des Mobilkommunikationssystems (500) zugeteilten Funkressourcenblock entspricht,
wobei der Funkressourcenblock einer kleinsten von dem Basisstations-Sendeempfänger (300) zuteilbaren Funkressourcenmenge entspricht, und
wobei die nicht benötigten Funkressourcen eine Teilmenge der Gruppe von Funkressourcen sind, wobei das Kontrollmodul (120) ferner ausgebildet ist, um vor der Übertragung der Nutzdaten Information über in seiner Umgebung befindliche und für eine Weitergabe der zugeteilten Funkressourcen geeignete zweite Sendeempfänger (200) zu bestimmen.

2. Sendeempfänger (100) gemäß Anspruch 1, wobei das Kontrollmodul (120) ausgebildet ist, um die Information über die nicht benötigten Funkressourcen an den zweiten Sendeempfänger (200) unter Nutzung zumindest eines Teils der zugeteilten Gruppe von Funkressourcen zu übertragen und wobei das Kontrollmodul (120) ausgebildet ist, um die Nutzdaten an einen anderen Sendeempfänger (410) unter Nutzung des gleichen oder eines anderen Teils der Gruppe der zugeteilten Funkressourcen zu übertragen.

3. Sendeempfänger (200) zur Kommunikation in einem Mobilkommunikationssystem (500), wobei das Mobilkommunikationssystem (500) zumindest einen weiteren Sendeempfänger (100) als ersten Sendeempfänger (100) und den Sendeempfänger (200) als zweiten Sendeempfänger (200) umfasst, mit
einem Sendeempfangsmodul (210) zur Kommunikation in dem Mobilkommunikationssystem (500) und zum Bestimmen von Information über nicht benötigte Funkressourcen des ersten Sendeempfängers (100) in dem Mobilkommunikationssystem (500); und
einem Kontrollmodul (220) zur Kontrolle des Sendeempfangsmoduls (210), wobei das Kontrollmodul (220) ausgebildet ist, um basierend auf der Information über die nicht benötigten Funkressourcen des ersten Sendeempfängers (100) Nutzdaten unter Nutzung der nicht benötigten Funkressourcen des ersten Sendeempfängers (100) in dem Mobilkommunikationssystem (500) an einen Basisstations-Sendeempfänger (300) zu übertragen,
wobei die Gruppe von zugeteilten Funkressourcen einem von dem Basisstations-Sendeempfänger (300) des Mobilkommunikationssystems (500) zugeteilten Funkressourcenblock entspricht,
wobei der Funkressourcenblock einer kleinsten von dem Basisstations-Sendeempfänger (300) zuteilbaren Funkressourcenmenge entspricht, und
wobei die nicht benötigten Funkressourcen eine Teilmenge der Gruppe von Funkressourcen sind,
wobei dem ersten Sendeempfänger (100) die Gruppe von Funkressourcen zur direkten Kommunikation mit einem anderen Sendeempfänger (410) von dem Basisstations-Sendeempfänger bereitgestellt wird,
wobei der zweite Sendeempfänger (200) als Relay-Sendeempfänger zwischen einem Basisstations-Sendeempfänger (300) und einem weiteren Sendeempfänger (400) des Mobilkommunikationssystem (500) ausgebildet ist und wobei das Kontrollmodul (220) ausgebildet ist, um zumindest einen Teil der nicht benötigten Funkressource dem weiteren Sendeempfänger (400) zuzuweisen und Nutzdaten des weiteren Sendeempfängers (400) unter Nutzung der nicht benötigten Funkressourcen zu übertragen.

4. Sendeempfänger (200) gemäß Anspruch 3, wobei das Kontrollmodul (220) zur Übertragung eigener Nutzdaten des zweiten Sendeempfängers (200) ausgebildet ist.

5. Sendeempfänger (200) gemäß einem der Ansprüche 3 oder 4, wobei das Kontrollmodul (220) zur Überwachung einer Kommunikation zwischen dem ersten Sendeempfänger (100) und einem anderen Sendeempfänger (410) ausgebildet ist und wobei das Bestimmen der Information über die nicht benötigten Funkressourcen einem Detektieren eines Übertragungsendes einer Datenübertragung zwischen dem ersten und dem anderen Sendeempfänger (410) entspricht.

6. Basisstations-Sendeempfänger (300) zur Kommunikation mit einem ersten Sendeempfänger (100) und einem zweiten Sendeempfänger (200) in einem Mobilkommunikationssystem (500), mit
einem Sendeempfangsmodul (310) zur Kommunikation in dem Mobilkommunikationssystem (500); und
einem Kontrollmodul (320) zur Kontrolle des Sendeempfangsmoduls (310), wobei das Kontrollmodul (320) ausgebildet ist, um
Funkressourcen zu verwalten und dem ersten Sendeempfänger (100) eine Gruppe von Funkressourcen zuzuteilen und um von dem zweiten Sendeempfänger (200) Nutzdaten über zumindest eine Teilgruppe der Funkressourcen zu empfangen,
wobei die Gruppe von zugeteilten Funkressourcen einem zugeteilten Funkressourcenblock entspricht,
wobei der Funkressourcenblock einer kleinsten von dem Basisstations-Sendeempfänger (300) zuteilbaren Funkressourcenmenge entspricht, und
wobei die Teilgruppe eine von dem ersten Sendeempfänger (100) an den zweiten Sendeempfänger (200) weitergegebene nicht benötigte Teilmenge der zugeteilten Funkressourcen ist.

7. Verfahren für einen Sendeempfänger (100) zum Bereitstellen von Information über nicht benötigte Funkressourcen in einem Mobilkommunikationssystem (500), wobei das Mobilkommunikationssystem (500) den Sendeempfänger (100) als ersten Sendeempfänger (100) und zumindest einen zweiten Sendeempfänger (200) umfasst, mit Kommunizieren (150) in dem Mobilkommunikationssystem (500);
Erhalten (152) von Information über eine Gruppe von zugeteilten Funkressourcen;
Bestimmen (154) von Information über einen tatsächlichen Bedarf an den zugeteilten Funkressourcen zur Übertragung von Nutzdaten des ersten Sendeempfängers (100) in dem Mobilkommunikationssystem (500);
Bestimmen (156) von Information über für die Übertragung der Nutzdaten nicht benötigte Funkressourcen aus der Information über den tatsächlichen Bedarf;
Übermitteln (158) von Information über die nicht benötigten Funkressourcen an den zweiten Sendeempfänger (200);
wobei die Gruppe von zugeteilten Funkressourcen einem von einem Basisstations-Sendeempfänger (300) des Mobilkommunikationssystems (500) zugeteilten Funkressourcenblock entspricht;
wobei der Funkressourcenblock einer kleinsten von dem Basisstations-Sendeempfänger (300) zuteilbaren Funkressourcenmenge entspricht;
wobei die nicht benötigten Funkressourcen eine Teilmenge der Gruppe von Funkressourcen sind, und
Bestimmen von Information über in seiner Umgebung befindliche und für eine Weitergabe der zugeteilten Funkressourcen geeignete zweite Sendeempfänger (200) vor der Übertragung der Nutzdaten.

8. Verfahren für einen Sendeempfänger (200) zur Kommunikation in einem Mobilkommunikationssystem (500), wobei das Mobilkommunikationssystem (500) zumindest einen weiteren Sendeempfänger (100) als ersten Sendeempfänger (100) und den Sendeempfänger (200) als zweiten Sendeempfänger (200) umfasst, mit
Kommunizieren (250) in dem Mobilkommunikationssystem (500);
Bestimmen (252) von Information über nicht benötigte Funkressourcen von dem ersten Sendeempfänger (100) in dem Mobilkommunikationssystem (500);
Übertragen (254) von Nutzdaten unter Nutzung der nicht benötigten Funkressourcen des ersten Sendeempfängers (100) in dem Mobilkommunikationssystem (500) an einen Basisstations-Sendeempfänger (300) basierend auf der Information über die nicht benötigten Funkressourcen des ersten Sendeempfängers (100),
wobei die Gruppe von zugeteilten Funkressourcen einem von dem Basisstations-Sendeempfänger (300) des Mobilkommunikationssystems (500) zugeteilten Funkressourcenblock entspricht,
wobei der Funkressourcenblock einer kleinsten von dem Basisstations-Sendeempfänger (300) zuteilbaren Funkressourcenmenge entspricht,
wobei die nicht benötigten Funkressourcen eine Teilmenge der Gruppe von Funkressourcen sind, und wobei dem ersten Sendeempfänger (100) die Gruppe von Funkressourcen zur direkten Kommunikation mit einem anderen Sendeempfänger (410) von dem Basisstations-Sendeempfänger bereitgestellt wird,
wobei der zweite Sendeempfänger (200) als Relay-Sendeempfänger zwischen einem Basisstations-Sendeempfänger (300) und einem weiteren Sendeempfänger (400) des Mobilkommunikationssystem (500) ausgebildet ist und wobei zumindest einen Teil der nicht benötigten Funkressource dem weiteren Sendeempfänger (400) zugewiesen wird und die Nutzdaten des weiteren Sendeempfängers (400) unter Nutzung der nicht benötigten Funkressourcen übertragen werden.

9. Verfahren für einen Basisstations-Sendeempfänger (300) zur Kommunikation mit einem ersten Sendeempfänger (100) und einem zweiten Sendeempfänger (200) in einem Mobilkommunikationssystem (500), mit
Kommunizieren (350) in dem Mobilkommunikationssystem (500);
Verwalten (352) von Funkressourcen;
Zuteilen (354) einer Gruppe von Funkressourcen an den ersten Sendeempfänger (100); und
Empfangen (356) von Nutzdaten von dem zweiten Sendeempfänger (200) über zumindest eine Teilgruppe der Funkressourcen,
wobei die Gruppe von zugeteilten Funkressourcen einem zugeteilten Funkressourcenblock entspricht,
wobei der Funkressourcenblock einer kleinsten von dem Basisstations-Sendeempfänger (300) zuteilbaren Funkressourcenmenge entspricht, und
wobei die Teilgruppe eine von dem ersten Sendeempfänger (100) an den zweiten Sendeempfänger (200) weitergegebene nicht benötigte Teilmenge der zugeteilten Funkressourcen ist.

10. Computerprogramm mit einem Programmcode zur Durchführung zumindest eines der Verfahren gemäß den Ansprüchen 7 bis 9, wenn der Programmcode auf einem Computer, einem Prozessor oder einer programmierbaren Hardwarekomponente ausgeführt wird.

## Claims

1. Transceiver (100) for providing information on non-required radio resources in a mobile communication system (500), the mobile communication system (500) comprising the transceiver (100) as the first transceiver (100) and at least one second transceiver (200), comprising
a transceiver module (110) for communicating in the mobile communication system (500) and receiving information on a group of allocated radio resources; and
a control module (120) for controlling the transceiver module (110), the control module being configured to
determine information on an actual need of allocated radio resources for transmitting payload data of the first transceiver (100) in the mobile communication system (500),
determine, from the information on the actual need of allocated radio resources, information on radio resources not required for the transmission of the payload data, and
transfer information on the non-required radio resources to the second transceiver (200),
wherein the group of allocated radio resources corresponds to one radio resource block allocated by a base station transceiver (300) of the mobile communication system (500),
wherein the radio resource block corresponds to a smallest amount of radio resources that may be allocated by the base station transceiver (300), and
wherein the non-required radio resources are a subset of the group of radio resources, wherein the control module (120) is further configured to determine information on second transceivers (200) located in its surroundings and suitable for passing on the allocated radio resources before the transmission of the payload data.

2. The transceiver (100) according to claim 1, wherein the control module (120) is configured to transmit the information on the non-required radio resources to the second transceiver (200) using at least part of the allocated group of radio resources and wherein the control module (120) is configured to transmit the payload data to another transceiver (410) using the same or a different part of the group of allocated radio resources.

3. A transceiver (200) for a communication in a mobile communication system (500), wherein the mobile communication system (500) comprises at least one further transceiver (100) as a first transceiver (100) and the transceiver (200) as a second transceiver (200), comprising
a transceiver module (210) for a communication in the mobile communication system (500) and for determining information on non-required radio resources of the first transceiver (100) in the mobile communication system (500); and
a control module (220) for controlling the transceiver module (210), the control module (220) being configured, based on the information on the non-required radio resources of the first transceiver (100), to transmit payload data to a base station transceiver (300) using the non-required radio resources of the first transceiver (100) in the mobile communication system (500),
wherein the group of allocated radio resources corresponds to one radio resource block allocated by the base station transceiver (300) of the mobile communication system (500),
wherein the radio resource block corresponds to a smallest amount of radio resources that may be allocated by the base station transceiver (300), and
wherein the non-required radio resources are a subset of the group of radio resources,
wherein the group of radio resources for direct communication with another transceiver (410) is provided to the first transceiver (100) by the base station transceiver,
wherein the second transceiver (200) is configured as a relay transceiver between a base station transceiver (300) and a further transceiver (400) of the mobile communication system (500) and wherein the control module (220) is configured to allocate at least a part of the non-required radio resources to the further transceiver (400) and transmit payload data of the further transceiver (400) utilizing the non-required radio resources.

4. The transceiver (200) according to claim 3, wherein the control module (220) is configured to transmit own payload data of the second transceiver (200).

5. The transceiver (200) according to any of claims 3 or 4, wherein the control module (220) is configured to monitor a communication between the first transceiver (100) and another transceiver (410) and wherein determining the information on the non-required radio resources corresponds to detecting a transmission end of a data transmission between the first and the other transceiver (410).

6. A base station transceiver (300) for a communication with a first transceiver (100) and a second transceiver (200) in a mobile communication system (500), comprising
a transceiver module (310) for a communication in the mobile communication system (500); and
a control module (320) for controlling the transceiver module (310), the control module (320) being configured to
manage radio resources and allocate a group of radio resources to the first transceiver (100) and to receive payload data on at least one sub-group of the radio resources from the second transceiver (200),
wherein the group of allocated radio resources corresponds to an allocated radio resource block,
wherein the radio resource block corresponds to a smallest amount of radio resources that may be allocated by the base station transceiver (300), and
wherein the sub-group is a non-required subset of the allocated radio resources passed on from the first transceiver (100) to the second transceiver (200).

7. A method for a transceiver (100) for providing information on non-required radio resources in a mobile communication system (500), the mobile communication system (500) comprising the transceiver (100) as the first transceiver (100) and at least one second transceiver (200), comprising
communicating (150) in the mobile communication system (500);
receiving (152) information on a group of allocated radio resources;
determining (154) information on an actual need of allocated radio resources for transmitting payload data of the first transceiver (100) in the mobile communication system (500);
determining (156) information on radio resources not required for the transmission of the payload data from the information on the actual need;
transferring (158) information on the non-required radio resources to the second transceiver (200);
wherein the group of allocated radio resources corresponds to one radio resource block allocated by a base station transceiver (300) of the mobile communication system (500);
wherein the radio resource block corresponds to a smallest amount of radio resources that may be allocated by the base station transceiver (300);
wherein the non-required radio resources are a subset of the group of radio resources, and
determining information on second transceivers (200) located in its surroundings and suitable for passing on the allocated radio resources before the transmission of the payload data.

8. A method for a transceiver (200) for a communication in a mobile communication system (500), wherein the mobile communication system (500) comprises at least one further transceiver (100) as a first transceiver (100) and the transceiver (200) as a second transceiver (200), comprising
communicating (250) in the mobile communication system (500);
determining (252) information on non-required radio resources from the first transceiver (100) in the mobile communication system (500);
transmitting (254) payload data utilizing the non-required radio resources of the first transceiver (100) in the mobile communication system (500) to a base station transceiver (300) based on the information on the non-required radio resources of the first transceiver (100),
wherein the group of allocated radio resources corresponds to one radio resource block allocated by the base station transceiver (300) of the mobile communication system (500),
wherein the radio resource block corresponds to a smallest amount of radio resources that may be allocated by the base station transceiver (300),
wherein the non-required radio resources are a subset of the group of radio resources, and wherein the group of radio resources is provided to the first transceiver (100) by the base station transceiver for direct communication with another transceiver (410),
wherein the second transceiver (200) is configured as a relay transceiver between a base station transceiver (300) and a further transceiver (400) of the mobile communication system (500) and wherein at least a part of the non-required radio resources is allocated to the further transceiver (400) and the payload data of the further transceiver (400) is transmitted utilizing the non-required radio resources.

9. A method for a base station transceiver (300) for a communication with a first transceiver (100) and a second transceiver (200) in a mobile communication system (500), comprising communicating (350) in the mobile communication system (500);
managing (352) radio resources;
allocating (354) a group of radio resources to the first transceiver (100); and
receiving (356) payload data from the second transceiver (200) on at least a sub-group of the radio resources,
wherein the group of allocated radio resources corresponds to an allocated radio resource block,
wherein the radio resource block corresponds to a smallest amount of radio resources that may be allocated by the base station transceiver (300), and
wherein the sub-group is a non-required subset of the allocated radio resources passed on from the first transceiver (100) to the second transceiver (200).

10. A computer program having a program code for executing at least one of the methods of claims 7 to 9, when the program code is executed on a computer, a processor, or a programmable hardware component.

## Revendications

1. Emetteur-récepteur (100) pour fournir des informations sur des ressources radio non requises dans un système de communication mobile (500), le système de communication mobile (500) comprenant l'émetteur-récepteur (100) comme premier émetteur-récepteur (100) et au moins un deuxième émetteur-récepteur (200), comprenant
un module émetteur-récepteur (110) pour communiquer dans le système de communication mobile (500) et pour recevoir des informations sur un groupe de ressources radio allouées ; et
un module de contrôle (120) pour contrôler le module émetteur-récepteur (110), le module de contrôle étant configuré pour
déterminer une information sur un besoin réel des ressources radio allouées pour la transmission de données de charge utile du premier émetteur-récepteur (100) dans le système de communication mobile (500),
déterminer, à partir de l'information sur le besoin réel des ressources radio allouées, une information sur les ressources radio non requises pour la transmission des données de charge utile, et
transmettre une information sur les ressources radio non requises au deuxième émetteur-récepteur (200),
le groupe de ressources radio allouées correspondant à un bloc de ressources radio alloué par un émetteur-récepteur de station de base (300) du système de communication mobile (500),
le bloc de ressources radio correspondant à une plus petite quantité de ressources radio pouvant être allouée par l'émetteur-récepteur de station de base (300), et
les ressources radio non requises étant un sous-ensemble du groupe de ressources radio, le module de contrôle (120) étant en outre configuré pour déterminer, avant la transmission des données de charge utile, des informations sur des seconds émetteurs-récepteurs (200) situés dans son environnement et adaptés à un transfert des ressources radio allouées.

2. L'émetteur-récepteur (100) selon la revendication 1, le module de contrôle (120) étant configuré pour transmettre l'information sur les ressources radio non requises au deuxième émetteur-récepteur (200) en utilisant au moins une partie du groupe de ressources radio alloué, et le module de contrôle (120) étant configuré pour transmettre les données de charge utile à un autre émetteur-récepteur (410) en utilisant la même partie ou une partie différente du groupe de ressources radio allouées.

3. Emetteur-récepteur (200) pour communiquer dans un système de communication mobile (500), le système de communication mobile (500) comprenant au moins un autre émetteur-récepteur (100) comme premier émetteur-récepteur (100) et l'émetteur-récepteur (200) comme deuxième émetteur-récepteur (200), comprenant
un module émetteur-récepteur (210) pour communiquer dans le système de communication mobile (500) et pour déterminer une information sur des ressources radio non requises du premier émetteur-récepteur (100) dans le système de communication mobile (500) ; et
un module de contrôle (220) pour contrôler le module émetteur-récepteur (210), le module de contrôle (220) étant configuré pour transmettre des données de charge utile à un émetteur-récepteur de station de base (300) sur la base de l'information sur les ressources radio non requises du premier émetteur-récepteur (100) en utilisant les ressources radio non requises du premier émetteur-récepteur (100) dans le système de communication mobile (500),
le groupe de ressources radio allouées correspondant à un bloc de ressources radio alloué par l'émetteur-récepteur de station de base (300) du système de communication mobile (500),
le bloc de ressources radio correspondant à une plus petite quantité de ressources radio pouvant être allouée par l'émetteur-récepteur de station de base (300), et
les ressources radio non requises étant un sous-ensemble du groupe de ressources radio,
le groupe de ressources radio pour une communication directe avec un autre émetteur-récepteur (410) étant fourni au premier émetteur-récepteur (100) par l'émetteur-récepteur de station de base,
le deuxième émetteur-récepteur (200) étant configuré comme un émetteur-récepteur de relais entre un émetteur-récepteur de station de base (300) et un autre émetteur-récepteur (400) du système de communication mobile (500) et le module de contrôle (220) étant configuré pour attribuer au moins une partie de la ressource radio non requise à l'autre émetteur-récepteur (400) et pour transmettre des données de charge utile de l'autre émetteur-récepteur (400) en utilisant les ressources radio non requises.

4. L'émetteur-récepteur (200) selon la revendication 3, le module de contrôle (220) étant configuré pour transmettre des propres données de charge utile du deuxième émetteur-récepteur (200).

5. L'émetteur-récepteur (200) selon l'une des revendications 3 ou 4, le module de contrôle (220) étant configuré pour superviser une communication entre le premier émetteur-récepteur (100) et un autre émetteur-récepteur (410), et la détermination de l'information sur les ressources radio non requises correspondant à une détection d'une fin de transmission d'une transmission de données entre le premier et l'autre émetteur-récepteur (410).

6. Emetteur-récepteur de station de base (300) pour communiquer avec un premier émetteur-récepteur (100) et un second émetteur-récepteur (200) dans un système de communication mobile (500), comprenant
un module émetteur-récepteur (310) pour communiquer dans le système de communication mobile (500) ; et
un module de contrôle (320) pour contrôler le module émetteur-récepteur (310), le module de contrôle (320) étant configuré pour
gérer des ressources radio et allouer un groupe de ressources radio au premier émetteur-récepteur (100) et recevoir du deuxième émetteur-récepteur (200) des données de charge utile sur au moins un sous-groupe des ressources radio,
le groupe de ressources radio allouées correspondant à un bloc de ressources radio alloué,
le bloc de ressources radio correspondant à une plus petite quantité de ressources radio pouvant être allouée par l'émetteur-récepteur de station de base (300), et
le sous-groupe étant un sous-ensemble non requis des ressources radio allouées transférée du premier émetteur-récepteur (100) au deuxième émetteur-récepteur (200).

7. Procédé pour un émetteur-récepteur (100) pour fournir une information sur des ressources radio non requises dans un système de communication mobile (500), le système de communication mobile (500) comprenant l'émetteur-récepteur (100) comme premier émetteur-récepteur (100) et au moins un deuxième émetteur-récepteur (200), comprenant communication (150) dans le système de communication mobile (500) ;
réception (152) d'une information sur un groupe de ressources radio allouées ;
détermination (154) d'une information sur un besoin réel des ressources radio allouées pour la transmission de données de charge utile du premier émetteur-récepteur (100) dans le système de communication mobile (500) ;
détermination (156) d'une information sur des ressources radio non requises pour la transmission des données de charge utile à partir de l'information sur le besoin réel ;
transmission (158) d'une information sur les ressources radio non requises au deuxième émetteur-récepteur (200) ;
le groupe de ressources radio allouées correspondant à un bloc de ressources radio alloué par un émetteur-récepteur de station de base (300) du système de communication mobile (500) ;
le bloc de ressources radio correspondant à une plus petite quantité de ressources radio pouvant être allouée par l'émetteur-récepteur de station de base (300) ;
les ressources radio non requises étant un sous-ensemble du groupe de ressources radio, et
détermination d'une information sur des seconds émetteurs-récepteurs (200) situés dans son environnement et adaptés à un transfert des ressources radio allouées avant la transmission des données de charge utile.

8. Procédé pour un émetteur-récepteur (200) pour communiquer dans un système de communication mobile (500), le système de communication mobile (500) comprenant au moins un autre émetteur-récepteur (100) comme premier émetteur-récepteur (100) et l'émetteur-récepteur (200) comme deuxième émetteur-récepteur (200), comprenant
communication (250) dans le système de communication mobile (500) ;
détermination (252) d'une information sur des ressources radio non requises du premier émetteur-récepteur (100) dans le système de communication mobile (500) ;
transmission (254) de données de charge utile en utilisant les ressources radio non requises du premier émetteur-récepteur (100) dans le système de communication mobile (500) à un émetteur-récepteur de station de base (300) sur la base de l'information sur les ressources radio non requises du premier émetteur-récepteur (100),
le groupe de ressources radio allouées correspondant à un bloc de ressources radio alloué par l'émetteur-récepteur de station de base (300) du système de communication mobile (500),
le bloc de ressources radio correspondant à une plus petite quantité de ressources radio pouvant être allouée par l'émetteur-récepteur de station de base (300),
les ressources radio non requises étant un sous-ensemble du groupe de ressources radio, et le groupe de ressources radio pour une communication directe avec un autre émetteur-récepteur (410) étant fourni au premier émetteur-récepteur (100) par l'émetteur-récepteur de station de base.
le deuxième émetteur-récepteur (200) étant configuré comme un émetteur-récepteur de relais entre un émetteur-récepteur de station de base (300) et un autre émetteur-récepteur (400) du système de communication mobile (500) et au moins une partie de la ressource radio non requise étant attribuée à l'autre émetteur-récepteur (400) et les données de charge utile de l'autre émetteur-récepteur (400) étant transmises en utilisant les ressources radio non requises.

9. Procédé pour un émetteur-récepteur de station de base (300) pour communiquer avec un premier émetteur-récepteur (100) et un second émetteur-récepteur (200) dans un système de communication mobile (500), comprenant
communication (350) dans le système de communication mobile (500) ;
gestion (352) de ressources radio ;
allocation (354) d'un groupe de ressources radio au premier émetteur-récepteur (100) ; et réception (356) de données de charge utile du deuxième émetteur-récepteur (200) sur au moins un sous-groupe des ressources radio,
le groupe de ressources radio allouées correspondant à un bloc de ressources radio allouées,
le bloc de ressources radio correspondant à une plus petite quantité de ressources radio pouvant être allouées par l'émetteur-récepteur de station de base (300), et
le sous-groupe étant un sous-ensemble non requis des ressources radio allouées transférée du premier émetteur-récepteur (100) au deuxième émetteur-récepteur (200).

10. Programme d'ordinateur présentant un code de programme pour exécuter au moins un des procédés selon les revendications 7 à 9 lorsque le code de programme est exécuté sur un ordinateur, un processeur ou un composant matériel programmable.
